# EUROPEAN PATENT APPLICATION

(11) **EP 4 210 122 A2**
(43) Date of publication of application: **12.07.2023**
(21) Application number: 22196240.0
(22) Date of filing: 16.09.2022
(51) Int. Cl.: H01M 4/04, H01M 4/139, H01M 4/62, H01M 10/052, H01M 4/02

(54) **SLURRY FOR POSITIVE ELECTRODE, MANUFACTURING METHOD OF SLURRY FOR POSITIVE ELECTRODE AND LITHIUM SECONDARY BATTERY**

(30) Priority: 13.12.2021 KR 20210178111
(71) Applicant: SK On Co., Ltd., Seoul 03161 (KR)
(72) Inventor: KO, Byoung Ho, 34124 Daejeon (KR); KIM, Jeong A, 34124 Daejeon (KR)
(74) Representative: Prüfer & Partner mbB Patentanwälte · Rechtsanwälte

(57) **Abstract**

A method of preparing a positive electrode slurry includes: preparing a first mixture comprising a positive electrode active material and an acid additive; preparing a second mixture comprising a conductive material and a dispersing material; and mixing the first mixture and the second mixture.

## Description

### BACKGROUND

### 1. Technical Field

The present disclosure generally relates to a positive electrode slurry, a method of preparing a positive electrode slurry, and a lithium secondary battery.

### 2. Related Art

With the development of electronics, communication, and space industries, the demand for lithium secondary batteries as an energy power source is rapidly increasing. In particular, as the importance of global eco-friendly policies is emphasized, the electric vehicle market is growing rapidly, and research and development on lithium secondary batteries are being actively conducted at home and abroad.

A lithium secondary battery includes a positive electrode, a negative electrode, and a separator disposed therebetween, and an active material into which lithium ions can be inserted and extracted is provided in the positive electrode and the negative electrode, respectively.

In addition, the positive electrode slurry for preparing the positive electrode may further include an active material as well as a conductive material and a dispersing material. The dispersed state of the conductive material may affect the cell resistance and the cell lifespan, and thus, research to improve the dispersed state of the conductive material is being discussed.

### SUMMARY

Embodiments provide a positive electrode slurry in which aggregation of a dispersing material is prevented and the dispersion state of a conductive material is improved, a method of preparing a positive electrode slurry, and a lithium secondary battery.

In accordance with an aspect of the present disclosure, there is provided a method of preparing a positive electrode slurry, the method comprising: preparing a first mixture comprising a positive electrode active material and an acid additive; preparing a second mixture comprising a conductive material and a dispersing material; and mixing the first mixture and the second mixture.

In accordance with an aspect of the present disclosure, a phase angle of the first mixture may be 45° to 90° when no shear stress is applied.

In accordance with an aspect of the present disclosure, a phase angle of the positive electrode slurry may be 10° to 45° when a shear stress having a shear rate of 500 sec-1 is provided for 300 seconds under a frequency environment of 1 Hz.

In accordance with an aspect of the present disclosure, the conductive material may comprise carbon nanotubes.

In accordance with an aspect of the present disclosure, a phase angle of the positive electrode slurry may be 10° to 30° when a shear stress having a shear rate of 500 sec-1 is provided for 300 seconds under a frequency environment of 1 Hz.

In accordance with an aspect of the present disclosure, the dispersing material may comprise H-NBR.

In accordance with an aspect of the present disclosure, the conductive material may comprise carbon black.

In accordance with an aspect of the present disclosure, the dispersing material may comprise H-NBR, and when a shear stress having a shear rate of 500 sec-1 is provided for 300 seconds, a phase angle of the positive electrode slurry may be 35° to 45°.

In accordance with an aspect of the present disclosure, the method may further comprise transferring the positive electrode slurry, the transferring of the positive electrode slurry may comprise passing the positive electrode slurry through a filter member.

In accordance with an aspect of the present disclosure, a solid content of the positive electrode slurry be 70% to 80%.

In accordance with an aspect of the present disclosure, wherein the positive electrode active material may comprise one of lithium manganese oxide, lithium nickel oxide, lithium cobalt oxide, lithium nickel manganese oxide, lithium nickel cobalt manganese oxide, lithium nickel cobalt aluminum oxide, lithium iron phosphate compound, lithium manganese phosphate compound, lithium cobalt phosphate compound, or lithium vanadium phosphate compound.

In accordance with an aspect of the present disclosure, the acid additive may comprise maleic acid.

In accordance with an aspect of the present disclosure, the first mixture may further comprise a binder, and
the binder may be polyvinylidene fluoride.

In accordance with an aspect of the present disclosure, there is provided a method of preparing a positive electrode slurry, the method comprising: preparing a first mixture comprising a positive electrode active material; preparing a second mixture comprising a conductive material and a dispersing material; and mixing the first mixture and the second mixture,a phase angle of the positive electrode slurry may be 3° to 45° when a shear stress having a shear rate of 500 sec-1 is provided for 300 seconds under a frequency environment of 1 Hz.

In accordance with an aspect of the present disclosure, the first mixture may further comprise an acid additive, the conductive material may comprise carbon nanotubes, and the dispersing material may comprise H-NBR.

In accordance with an aspect of the present disclosure, the first mixture may further comprise an acid additive, and
the conductive material may comprise carbon black.

In accordance with an aspect of the present disclosure, there is provided a positive electrode slurry prepared according to the method of preparing a positive electrode slurry.

In accordance with an aspect of the present disclosure, there is provided a lithium secondary battery comprising:
a positive electrode prepared using the positive electrode slurry; and a negative electrode comprising a negative electrode active material layer.

According to an embodiment of the present disclosure, it is possible to provide a positive electrode slurry in which aggregation of a dispersing material is prevented and the dispersion state of a conductive material is improved, a method of preparing a positive electrode slurry, and a lithium secondary battery.

### BRIEF DESCRIPTION OF THE DRAWINGS

FIG.1 illustrates a cross-sectional view schematically showing a lithium secondary battery in accordance with an embodiment of the present disclosure.
FIG. 2 illustrates a flowchart schematically showing a method of preparing a positive electrode slurry in accordance with an embodiment of the present disclosure.
FIGS. 3 and 4 illustrate images showing experimental results to confirm whether passing through a filter during the process using the positive electrode slurry according to Examples and Comparative Examples.

### DETAILED DESCRIPTION

The present disclosure relates to a positive electrode slurry, a method of preparing a positive electrode slurry, and a lithium secondary battery.

Hereinafter, a positive electrode slurry, a method of preparing a positive electrode slurry, and a lithium secondary battery in accordance with embodiments will be described with reference to the accompanying drawings.

### 1. Lithium secondary battery

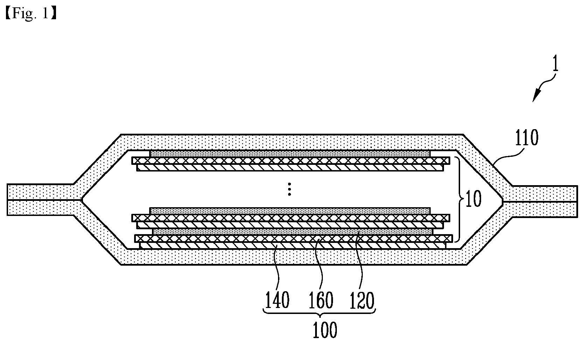

FIG.1 illustrates a cross-sectional view schematically showing a lithium secondary battery in accordance with an embodiment of the present disclosure.

Referring to FIG. 1, the lithium secondary battery 1 may include an exterior member 110, a positive electrode 120, a negative electrode 140, and a separator 160.

The exterior member 110 may be provided to surround the internal components of the lithium secondary battery 1 to protect the internal components from external influences. The exterior member 110 may be one of a pouch type, a can type, and a prismatic type, and is not limited to a specific example.

The positive electrode 120 and the negative electrode 140 may include a current collector and an active material layer disposed on the current collector, respectively. For example, the positive electrode 120 may include a positive electrode current collector and a positive electrode active material layer, and the negative electrode 140 may include a negative electrode current collector and a negative electrode active material layer.

The current collector may include a known conductive material in a range that does not cause a chemical reaction in the lithium secondary battery 1. For example, the current collector may include any one of stainless steel, nickel (Ni), aluminum (Al), titanium (Ti), copper (Cu), and alloys thereof, and may be provided in various forms, such as a film, a sheet, and a foil.

The active material layer includes an active material. For example, the positive electrode active material layer may include a positive electrode active material, and the negative electrode active material layer may include a negative electrode active material.

The positive electrode active material may be a material in which lithium (Li) ions may be intercalated and deintercalated. The positive electrode active material may be lithium metal oxide. For example, the positive electrode active material may be one of lithium manganese oxide, lithium nickel oxide, lithium cobalt oxide, lithium nickel manganese oxide, lithium nickel cobalt manganese oxide, lithium nickel cobalt aluminum oxide, lithium iron phosphate compound, lithium manganese phosphate compound, lithium cobalt phosphate compound, or lithium vanadium phosphate compound. For example, the positive electrode active material may include LiNi0.88 Co0.06Mn0.06O2 and LiNi0.83 Co0.085Mn0.085O2. However, the present disclosure is not necessarily limited to the above-described examples.

The negative electrode active material may be a material in which lithium ions may be intercalatied and deintercalated. For example, the negative electrode active material may be any one of crystalline carbon, amorphous carbon, carbon composite material, carbon-based material such as carbon fiber, lithium alloy, silicon (Si), and tin (Sn). According to an embodiment, the negative electrode active material may be natural graphite or artificial graphite, but is not limited to specific examples.

The positive electrode 120 and the negative electrode 140 may further include a binder and a conductive material, respectively.

The binder may mediate bonding between the current collector and the active material layer, thereby improving mechanical stability. According to an embodiment, the binder may be an organic binder or an aqueous binder, and may be used together with a thickener such as carboxymethyl cellulose (CMC). According to an embodiment, the organic binder may be one of vinylidene fluoride-hexafluoropropylene copolymer (PVDF-co-HFP), polyvinylidene fluoride (PVDF), polyacrylonitrile, and polymethylmethancrylate, and the aqueous binder may be styrenebutadiene rubber (SBR), but is not necessarily limited thereto.

The conductive material may improve electrical conductivity of the lithium secondary battery 1. The conductive material may include a metal-based material. According to an embodiment, the conductive material may include a conventional carbon-based conductive material. For example, the conductive material may include any one of graphite, carbon black, graphene, and carbon nanotubes. Preferably, the conductive material may include carbon nanotubes.

The separator 160 may be disposed between the positive electrode 120 and the negative electrode 140. The separator 160 is configured to prevent an electrical short circuit between the positive electrode 120 and the negative electrode 140 and to generate the flow of ions.

According to an embodiment, the separator 160 may include a porous polymer film or a porous nonwoven fabric. Here, the porous polymer film may be composed of a single layer or multiple layers including polyolefin polymers such as ethylene polymers, propylene polymers, ethylene/butene copolymers, ethylene/hexene copolymers, and ethylene/methacrylate copolymers, etc. The porous nonwoven fabric may include high melting point glass fibers and polyethylene terephthalate fibers. However, the present invention is not limited thereto, and in some embodiments, the separator may be a high heat-resistant separator (CCS) including ceramic.

According to an embodiment, an electrode cell 100 including a positive electrode 120, a negative electrode 140, and the separator 160 may be provided. A plurality of electrode cells 100 may be provided and sequentially stacked in the exterior member 110.

According to an embodiment, an electrode cell 100 including a positive electrode 120, a negative electrode 140, and a separator 160 may be provided. A plurality of electrode cells 100 may be provided and may be wound, laminated, or folded, and thus an electrode assembly 10 may be provided.

The electrode assembly 10 may be provided together with an electrolyte to prepare the lithium secondary battery 1 according to an embodiment. According to an embodiment, the lithium secondary battery 1 may be any one of a cylindrical type using a can, a prismatic type, a pouch type, and a coin type, but is not limited thereto.

The electrolyte may be a non-aqueous electrolyte. The electrolyte may include a lithium salt and an organic solvent.

According to an embodiment, the organic solvent may include one of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

### 2. Method of Preparing a Positive Electrode Slurry

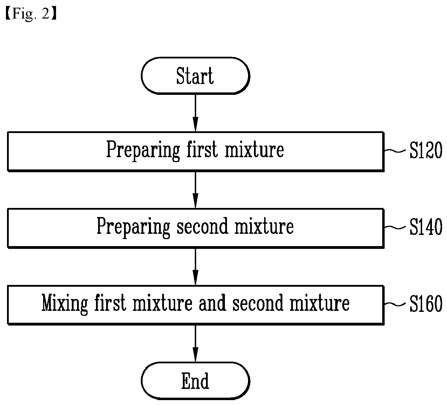

Hereinafter, with reference to FIG. 2, a method of preparing a positive electrode slurry for preparing the positive electrode 120 according to an embodiment will be described. Contents that may overlap with the above will be simplified or omitted.

FIG. 2 illustrates a flowchart schematically showing a method of preparing a positive electrode slurry in accordance with an embodiment of the present disclosure.

Referring to FIG. 2, the method of preparing the positive electrode slurry may include the operation of preparing a first mixture S120, the operation of preparing a second mixture S140, and the operation of mixing the first mixture and the second mixture S160.

The operation of preparing the first mixture S120 and the operation of preparing the second mixture S140 may be performed separately.

The relationship of order between the operation of preparing the first mixture S120 and the operation of preparing the second mixture S140 is not limited to a particular example. For example, the operation of preparing the first mixture S120 may be performed prior to the operation of preparing the second mixture S140, and the operation of preparing the second mixture S140 may be performed prior to the operation of preparing the first mixture S120. According to an embodiment, while the operation of preparing the first mixture S120 and the operation of preparing the second mixture S140 are performed within the same time period, each operation S120, S140 may be separately performed.

In the operation of preparing the first mixture S120, a first mixture may be provided. Here, the first mixture may include a positive electrode active material, a binder, a first solvent, and an acid additive. The first mixture may refer to a mixture of the positive electrode active material, the binder, the first solvent, and the acid additive.

In this operation, the positive active material, the binder, the first solvent, and the acid additive may be mixed.

The acid additive is an acidic material, and may refer to a material added to the first mixture. For example, the acid additive may include maleic acid.

According to an embodiment, the acid additive may prevent gelation that may occur in the first mixture.

When a plurality of hydroxide ions exist in a mixture for experimentally preparing a positive electrode slurry, a material capable of forming a polymer by reacting the hydroxide ions with the binder may be provided. For example, when the binder is polyvinylidene fluoride (PVDF), a defluorination reaction between hydroxide ions and polyvinylidene fluoride (PVDF) may occur. Accordingly, a double bond between carbons may be formed, and a free radical polymerization reaction may occur according to an embodiment, thereby causing a gelation phenomenon.

However, according to an embodiment, the acid additive may be included in the first mixture, so that the gelation phenomenon may be reduced. For example, acid ions of the acid additive may react with hydroxide ions that may be present in the first mixture, and hydroxide ions in the first mixture may be removed. Accordingly, as described above, the gelation phenomenon that may occur due to the presence of hydroxide ions may be prevented.

In addition, according to an embodiment, the acid additive may be included in the first mixture, thereby suppressing increase in viscosity due to moisture in the air.

The first solvent may include a material suitable for mixing the materials of the first mixture. For example, as the first solvent, water or an organic solvent may be used. The first solvent may include one of N-methyl pyrrolidone(NMP), dimethyl formamide(DMF), acetone, and dimethyl acetamide. However, the present disclosure is not necessarily limited to the above-described examples.

According to an embodiment, the viscosity of the first mixture may be 10 Pa·s or more. According to an embodiment, the viscosity of the first mixture may be 100 Pa·s or more.

According to an embodiment, the phase angle of the first mixture may be 45° to 90° when no separate shear stress is applied. Here, the phase angle of the first mixture may be measured in an environment having a frequency of 1 Hz. For example, when the first mixture includes PVDF as the binder, NMP as the first solvent, and maleic acid as the acid additive, the phase angle of the first mixture may be 50° to 70° when a separate shear stress is not applied.

In the operation of preparing the second mixture S140, a second mixture may be provided. Here, the second mixture may include a conductive material, a dispersing material, and a second solvent. The second mixture may refer to a mixture of a conductive material, a dispersing material, and a second solvent.

In this operation, the conductive material, the dispersing material, and the second solvent may be mixed.

The second solvent may include a material suitable for mixing the materials of the second mixture. For example, as the second solvent, n-Methyl Pyrrolidone(NMP) may be used. However, the present disclosure is not necessarily limited to the above-described examples.

The dispersing material may be selected from a group consisting of alkane-based, aryl-based, polyvinyl pyridine-based, polyacrylate-based, glycol-based, PVdF (polyvinylidene fluoride)-based, polyurethane-based, ketone-based, carbonate-based, benzene-based and mixtures thereof.

According to an embodiment, as the dispersing material, any one selected from poly acrylic acid (PAA), poly viny pyrrolidone (PVP), and n-methyl pyrrolidone (NMP) or a mixture thereof may be used. Preferably, the dispersing material may include nitrile butadiene rubber (H-NBR).

In the operation of mixing the first mixture and the second mixture S160, the first mixture and the second mixture may be mixed, and thus the positive electrode slurry according to an embodiment may be prepared.

According to an embodiment, the solid content of the prepared positive electrode slurry may be 70% to 80%.

According to an embodiment, the phase angle of the positive electrode slurry may be 10° to 45° when a shear stress having a shear rate of 500 sec-1 is provided for 300 seconds under a frequency environment of 1 Hz.

For example, when carbon nanotubes are included as a conductive material of the positive electrode slurry and the first mixture includes an acid additive, the phase angle of the positive electrode slurry may be 5° to 45° under the measurement conditions. When carbon nanotubes are included as the conductive material of the positive electrode slurry, and the first mixture includes an acid additive, the phase angle of the positive electrode slurry may be 10° to 30° under the measurement conditions.

As another example, when carbon black is included as the conductive material of the positive electrode slurry, H-NBR is included as the dispersing material, and the first mixture includes an acid additive, the phase angle of the positive electrode slurry may be 35° to 45° under the measurement conditions.

Meanwhile, according to an embodiment, an operation of transferring process materials between individual operations may be performed. For example, after the operation of mixing the first mixture and the second mixture S160, the positive electrode slurry may be transferred through a specific path. In addition, the first mixture prepared in the operation of preparing the first mixture S120 may be transferred through a specific path. In addition, the second mixture prepared in the operation of preparing the second mixture S140 may be transferred through a specific path.

Here, in order to prevent impurities from being included in the positive electrode slurry, an operation of filtering impurities in the transfer path may be performed. For example, the positive electrode slurry may be passed through a filter member to filter out impurities. The first mixture may be passed through a filter member to filter out impurities. The second mixture may be passed through a filter element to filter out impurities.

According to an embodiment, the filter member may have a mesh shape. However, the shape of the filter member is not necessarily limited to the above-described example.

According to an embodiment, even when the operation of filtering the impurities is performed, the filter clogging phenomenon may not occur, and thus processing property may be improved. Details will be described later with reference to experimental examples.

According to an embodiment, the acid additive included in the first mixture may be provided separately from the conductive material and the dispersing material included in the second mixture, so that the dispersion state of the conductive material may be improved.

Experimentally, the acid additive may form a bond with the dispersing material so that a portion of the conductive material may be exposed and may aggregate with other adjacent conductive materials. In other words, the acid additive may weaken the interaction between the conductive material and the dispersing material, and in this case, the dispersibility of the conductive material may be reduced.

However, according to an embodiment, the first mixture including the acid additive and the second mixture including the conductive material and the dispersing material may be separately prepared, and thus the reaction between the acid additive and the dispersing material may be minimized. As a result, according to the embodiment, the dispersibility of the conductive material may be improved.

Furthermore, when the dispersibility of the conductive material is improved, the resistance of the positive electrode prepared using the prepared positive electrode slurry may be reduced, and thus the cell life may be improved.

The positive electrode 120 according to an embodiment may be prepared by coating, drying, and pressing the prepared positive electrode slurry on a current collector.

Hereinafter, Examples and Comparative Examples will be described so that those skilled in the art to which the present disclosure pertains may easily carry out. However, the embodiments of the present disclosure may be implemented in different forms from those described later, and are not necessarily limited to specific embodiments.

### (1) Examples and Comparative Examples

### [Example 1]

In order to prepare the positive electrode slurry according to Example 1, the first mixture and the second mixture were separately prepared.

To prepare the first mixture, an NCM-based positive active material, PVDF, NMP, and maleic acid were mixed. As the positive electrode active material, a mixture of LiNi0.88 Co0.06Mn0.06O2 and LiNi0.83 Co0.085Mn0.085O2 was used. Here, 30.000 g, 12.857 g, 5.244 g, 5.311 g, and 0.06 g of LiNi0.88 Co0.06Mn0.06O2, LiNi0.83 Co0.085Mn0.085O2, a 10 wt% PVDF solution, NMP, and maleic acid were prepared, respectively, and mixed at a mixing speed of 1000 rpm for 2 minutes. Meanwhile, the content of maleic acid was provided as much as 0.2% of the content of LiNi0.88 Co0.06Mn0.06O2, and the solid content of the first mixture was prepared to be 81.2%.

To prepare the second mixture, 0.2622 g, 0.05243 g, and 4.929 g of carbon nanotubes, H-NBR, and NMP were mixed. Accordingly, a second mixture having a solid content of 6% (e.g., including 6 wt% of carbon nanotubes and H-NBR) was prepared.

Thereafter, the first mixture and the second mixture were mixed at a mixing speed of 1000 rpm for 10 minutes to prepare a positive electrode slurry according to Example 1.

### [Example 2]

As in Example 1, the first mixture and the second mixture were prepared separately.

Example 2 is different from Example 1 in that carbon black was used as a conductive material.

To prepare the first mixture, an NCM-based positive electrode active material, PVDF, NMP, and maleic acid were mixed. As the positive electrode active material, a mixture of LiNi0.88 Co0.06Mn0.06O2 and LiNi0.83 Co0.085Mn0.085O2 was used. Here, 30.000g, 12.857g, 5.368g, 0.058g, and 0.06g of LiNi0.88 Co0.06Mn0.06O2, LiNi0.83 Co0.085Mn0.085O2, a 10 wt% PVDF solution, NMP, and maleic acid were prepared, respectively, and mixed at a mixing speed of 1000 rpm for 2 minutes. Meanwhile, the content of maleic acid was provided as much as 0.2% of the content of LiNi0.88 Co0.06Mn0.06O2, and the solid content of the first mixture was prepared to be 89.9%.

To prepare the second mixture, 1.341 g, 0.083 g, and 10.452 g of carbon black, H-NBR, and NMP were mixed. Accordingly, a second mixture having a solid content of 12% (e.g., including 12 wt% of carbon black and H-NBR) was prepared.

Thereafter, the first mixture and the second mixture were mixed at a mixing speed of 1000 rpm for 10 minutes to prepare a positive electrode slurry according to Example 2.

### [Example 3]

As in Example 1, the first mixture and the second mixture were prepared separately.

Example 3 is different from Example 1 in that carbon black is used as a conductive material and H-NBR is not included in the second mixture.

To prepare the first mixture, an NCM-based positive active material, PVDF, NMP, and maleic acid were mixed. As the positive electrode active material, a mixture of LiNi0.88 Co0.06Mn0.06O2 and LiNi0.83 Co0.085Mn0.085O2 was used. Here, 30.000 g, 12.857 g, 5.368 g, 2.237 g, and 0.06 g of LiNi0.88 Co0.06Mn0.06O2, LiNi0.83 Co0.085Mn0.085O2, a 10 wt% PVDF solution, NMP, and maleic acid were prepared, respectively, and mixed at a mixing speed of 1000 rpm for 2 minutes. Meanwhile, the content of maleic acid was provided as much as 0.2% of the content of LiNi0.88 Co0.06Mn0.06O2, and the solid content of the first mixture was prepared at 86.0%.

To prepare a second mixture, 1.342 g and 8.244 g of carbon black and NMP were mixed. Accordingly, a second mixture having a solid content of 14% (e.g., including 14 wt% of carbon black) was prepared.

Thereafter, the first mixture and the second mixture were mixed at a mixing speed of 1000 rpm for 10 minutes to prepare a positive electrode slurry according to Example 3.

### [Example 4]

As in Example 1, the first mixture and the second mixture were prepared separately.

Example 4 differs from Example 1 in that an acid additive is not included in the first mixture.

To prepare the first mixture, an NCM-based positive electrode active material, PVDF, and NMP were mixed. As the positive electrode active material, a mixture of LiNi0.88 Co0.06Mn0.06O2 and LiNi0.83 Co0.085Mn0.085O2 was used. Here, 30.000g, 12.857g, 5.244g, and 5.311g of LiNi0.88 Co0.06Mn0.06O2, LiNi0.83 Co0.085Mn0.085O2, a 10 wt% PVDF solution, and NMP were prepared, respectively, and mixed at a mixing speed of 1000 rpm for 2 minutes. The solid content of the first mixture was prepared at 81.2%.

To prepare the second mixture, 0.2622 g, 0.05243 g, and 4.929 g of carbon nanotubes, H-NBR, and NMP were mixed. Accordingly, a second mixture having a solid content of 6% (e.g., including 6 wt% of carbon nanotubes and H-NBR) was prepared.

Thereafter, the first mixture and the second mixture were mixed at a mixing speed of 1000 rpm for 10 minutes to prepare a positive electrode slurry according to Example 4.

### [Example 5]

As in Example 1, the first mixture and the second mixture were prepared separately.

Example 5 is different from Example 1 in that carbon black is used as a conductive material, H-NBR is not included in the second mixture, and an acid additive is not included in the first mixture.

To prepare the first mixture, an NCM-based positive electrode active material, PVDF, and NMP were mixed. As the positive electrode active material, a mixture of LiNi0.88 Co0.06Mn0.06O2 and LiNi0.83 Co0.085Mn0.085O2 was used. Here, 30.000g, 12.857g, 5.368g, and 2.237g of LiNi0.88 Co0.06Mn0.06O2, LiNi0.83 Co0.085Mn0.085O2, a 10 wt% PVDF solution, and NMP were prepared, respectively, and mixed at a mixing speed of 1000 rpm for 2 minutes. The solid content of the first mixture was prepared at 86.0%.

To prepare a second mixture, 1.342 g and 8.244 g of carbon black and NMP were mixed. Accordingly, a second mixture having a solid content of 14% (e.g., including 14 wt% of carbon black) was prepared.

Thereafter, the first mixture and the second mixture were mixed at a mixing speed of 1000 rpm for 10 minutes to prepare a positive electrode slurry according to Example 5.

### [Comparative Example]

The first mixture was not separately prepared, and collectively mixed with the second mixture.

To prepare a positive electrode slurry according to Comparative Example, an NCM-based positive electrode active material, PVDF, NMP, maleic acid, and a second mixture were mixed.

To prepare the second mixture, 0.2622 g, 0.05243 g, and 4.929 g of carbon nanotubes, H-NBR, and NMP were mixed. Accordingly, a second mixture having a solid content of 6% (e.g., including 6 wt% of carbon nanotubes and H-NBR) was prepared.

As the positive electrode active material, a mixture of LiNi0.88 Co0.06Mn0.06O2 and LiNi0.83 Co0.085Mn0.085O2 was used in the same manner as in Example 1. Here, 30.000g, 12.857g, 5.244g, 5.311g, 0.06g, and 5.244g of LiNi0.88 Co0.06Mn0.06O2, LiNi0.83 Co0.085Mn0.085O2, a 10 wt% PVDF solution, NMP, maleic acid, and a second mixture were prepared, respectively, and mixed at a mixing speed of 1000 rpm for 10 minutes. Accordingly, a positive electrode slurry according to Comparative Example was prepared.

### (2) Rheological properties

Rheological properties were compared between Examples and Comparative Examples. Specifically, the solid content, viscosity, and phase angle of the first mixture, the second mixture, and the positive electrode active material prepared according to Examples and Comparative Examples were measured, and are shown in Table 1.

Here, the solid content in Table 1 indicates the solid content of the prepared first mixture, the second mixture, and the positive electrode slurry. And the viscosity of Table 1 represents the viscosity of the object measured at a shear rate of 1 sec-1. And the phase angle of Table 1 was measured in an environment of a frequency of 1 Hz before the shear stress was applied, and also in an environment of a frequency of 1 Hz after the shear stress was applied. Here, the shear rate of the shear stress was controlled at 500 sec-1 for 300 sec.

**TABLE 1**

| Type | | Solid content [%] | Viscosity [Pa·s] | Phase angle | |
|---|---|---|---|---|---|
| | | | | Before shear stress | After shear stress |
| Example 1 | First mixture | 81.2 | 17.2 | 69.1 | 56.5 |
| | Second mixture | 6.0 | 3.3 | 33.2 | 45.8 |
| | Slurry | 74.5 | 34.6 | 18.9 | 20.1 |
| Example 2 | First mixture | 90.0 | 202.1 | 1.02 | 2.11 |
| | Second mixture | 14.0 | 98.3 | 4.7 | 6.9 |
| | Slurry | 74.5 | 132.5 | 58.2 | 39.1 |
| Example 3 | First mixture | 86.0 | 191.5 | 52.1 | 33.9 |
| | Second mixture | 14.0 | 104.7 | 1.36 | 2.31 |
| | Slurry | 74.5 | 156.4 | 9.1 | 10.9 |
| Example 4 | First mixture | 81.2 | 16.8 | 76.2 | 52.6 |
| | Second mixture | 6.0 | 3.3 | 33.2 | 45.8 |
| | Slurry | 74.5 | 2.5 | 75.4 | 66.2 |
| Example 5 | First mixture | 86.0 | 116.8 | 67.3 | 24.6 |
| | Second mixture | 14.0 | 104.7 | 1.36 | 2.31 |
| | Slurry | 74.5 | 4.1 | 50.3 | 60.5 |
| Comparative Example | Slurry | 74.5 | 39.8 | 18.8 | 17.6 |

Referring to Example 1, Example 3, and Comparative Example of Table 1, when the acid additive is further included in the first mixture, the phase angle of the prepared positive electrode slurry may be 45° or less. In this case, in the operation of filtering the impurities, the positive electrode slurry may not normally pass through the filter member. However, according to Examples, while the acid additive is included in the first mixture, the first mixture and the second mixture are separately provided, so that the filter clogging issue that may occur during the transfer of the positive electrode slurry, the first mixture, and the second mixture may be reduced.

In addition, referring to Examples 2 and 3 of Table 1, when H-NBR is further included in the second mixture, the phase angle of the slurry may be prepared relatively high, which may mean that when the second mixture further includes H-NBR, the dispersibility of the conductive material is further improved.

### (3) Slurry processing property

The processing property of the positive electrode slurry between Examples and the Comparative Example was compared. Specifically, when transferring the positive electrode slurries prepared according to Examples and Comparative Example, in order to proceed with the process, it was checked whether the filter was clogged. By passing the positive electrode slurry through the filter, it was determined whether the filter was clogged by checking whether excessive impurities were generated and whether the flowability of the slurry was good. Table 2 shows whether the filter for filtering impurities is clogged when transferring the prepared positive electrode slurry.

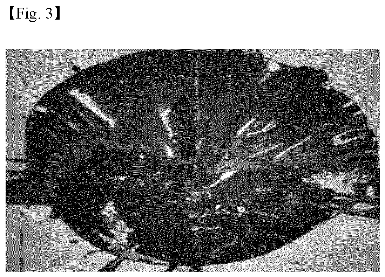

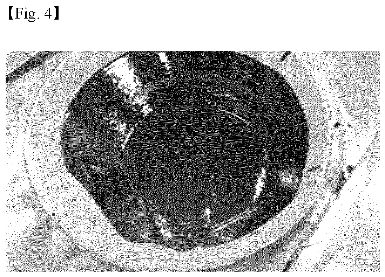

FIGS. 3 and 4 illustrate images showing experimental results to confirm whether passing through a filter during the process using the positive electrode slurry according to Examples and Comparative Example. This experiment was conducted by passing the prepared positive electrode slurry through a filter including a mesh structure, and analyzing the results accordingly. The filter used was prepared in a 120 mesh standard and has a stainless steel material. Here, the 120 mesh standard indicates a mesh structure including mesh holes formed by dividing the horizontal and vertical lengths into 120 equal parts when the horizontal and vertical lengths are each 1 inch.

FIG.3 illustrates an image showing a state in which the filter passes normally while transferring the positive electrode slurry according to Examples. FIG. 4 illustrates an image illustrating a filter clogging phenomenon that occurs while transferring the positive electrode slurry according to the Comparative Example. For example, FIG. 3 relates to Example 1 and is an image showing an impurity filter in which filter clogging has not occurred, and FIG. 4 is an image illustrating an impurity filter in which filter clogging has occurred as related to Comparative Example.

**TABLE 2**

| Type | Whether the filter is clogged |
|---|---|
| Example 1 | X |
| Example 2 | X |
| Example 3 | X |
| Example 4 | X |
| Example 5 | X |
| Comparative Example | O |

Referring to Table 2, FIGS. 3 and 4, it may be seen that the filter clogging phenomenon does not occur in the positive electrode slurry according to Examples during the transfer process, and the filter clogging phenomenon occurs in the positive electrode slurry according to Comparative Example during the transfer process. Accordingly, according to Examples, it is possible to provide a positive electrode slurry having improved processability.

## Claims

1. A method of preparing a positive electrode slurry, the method comprising:
preparing a first mixture comprising a positive electrode active material and an acid additive;
preparing a second mixture comprising a conductive material and a dispersing material; and
mixing the first mixture and the second mixture.

2. The method of claim 1, wherein a phase angle of the first mixture is 45° to 90° when no shear stress is applied.

3. The method of claim 1 or 2, wherein a phase angle of the positive electrode slurry is 10° to 45° when a shear stress having a shear rate of 500 sec⁻¹ is provided for 300 seconds under a frequency environment of 1 Hz.

4. The method of anyone of claims 1 to 3, wherein the conductive material comprises carbon nanotubes.

5. The method of anyone of the preceding claims, wherein a phase angle of the positive electrode slurry is 10° to 30° when a shear stress having a shear rate of 500 sec⁻¹ is provided for 300 seconds under a frequency environment of 1 Hz.

6. The method of anyone of the preceding claims, wherein the dispersing material comprises H-NBR.

7. The method of claim 1, wherein the conductive material comprises carbon black,
the dispersing material comprises H-NBR, and
when a shear stress having a shear rate of 500 sec⁻¹ is provided for 300 seconds, a phase angle of the positive electrode slurry is 35° to 45°.

8. The method of anyone of the preceding claims, further comprising transferring the positive electrode slurry,
wherein the transferring of the positive electrode slurry comprises passing the positive electrode slurry through a filter member.

9. The method of anyone of the preceding claims, wherein a solid content of the positive electrode slurry is 70% to 80%.

10. The method of anyone of the preceding claims, wherein the acid additive comprises maleic acid.

11. The method of anyone of the preceding claims, wherein the first mixture further comprises a binder, and
the binder is polyvinylidene fluoride.

12. A method of preparing a positive electrode slurry, the method comprising:
preparing a first mixture comprising a positive electrode active material;
preparing a second mixture comprising a conductive material and a dispersing material; and
mixing the first mixture and the second mixture,
wherein a phase angle of the positive electrode slurry is 3° to 45° when a shear stress having a shear rate of 500 sec⁻¹ is provided for 300 seconds under a frequency environment of 1 Hz.

13. The method of claim 12, wherein the first mixture further comprises an acid additive,
the conductive material comprises carbon nanotubes, and
the dispersing material comprises H-NBR.

14. The method of claim 12 or 13, wherein the first mixture further comprises an acid additive, and
the conductive material comprises carbon black.

15. A lithium secondary battery (1) comprising:
a positive electrode (120) prepared using the positive electrode slurry prepared according to anyone of claims 1 to 14; and
a negative electrode (140) comprising a negative electrode active material layer.
